Europäisches Patentamt

European Patent Office

Office européen des brevets

(19)

(11) Veröffentlichungsnummer: 0 336 156
A1

(12) EUROPÄISCHE PATENTANMELDUNG

(21) Anmeldenummer: 89104632.8

(22) Anmeldetag: 15.03.89

(51) Int. Cl.⁴: G02B 6/42 , G02B 6/32

(30) Priorität: 31.03.88 DE 3810938

(43) Veröffentlichungstag der Anmeldung:
11.10.89 Patentblatt 89/41

(84) Benannte Vertragsstaaten:
DE GB

(71) Anmelder: Siemens Aktiengesellschaft
Wittelsbacherplatz 2
D-8000 München 2(DE)

(72) Erfinder: Taumberger, Franz
Stiftsbogen 118
D-8000 München 70(DE)
Erfinder: Greil, Andreas
Preysingstrasse 32/2
D-8000 München 80(DE)

(54) Hermetisch dichte Lichtleitfaser-Linsen-Anordnung, insbesondere für optoelektronische Module, und Verfahren zu ihrer Herstellung.

(57) Bei einer hermetisch dichten Lichtleitfaser-Linsen-Anordnung, insbesondere für optoelektronische Module, mit einer Lichtleitfaser (1), die durch ein Metallröhrchen (2) geführt und in diesem fixiert ist, das über einen Flansch (3) an einer Öffnung in der Modulgehäusewand (6) befestigt ist, und mit einer im Modulgehäuse fixierten Kugellinse (4), soll ein unkompliziertes, exaktes Justieren und Fixieren der Fokuslage und der optimalen Übereinstimmung der optischen Achsen ermöglicht werden. Das die Lichtleitfaser (1) führende Metallröhrchen (2) ist im Flansch (3) durch Axialverschiebung auf einen vorgegebenen Abstand (A) des Fokusses zu der Kugellinse (4) justiert am Flansch (3) befestigt. Die aus einem Metallröhrchen bestehende Kugellinsenhalterung (5) ist auf der gehäuseseitigen Stirnfläche des Flansches (3) durch Querverschiebung auf Übereinstimmung der optischen Achsen der Anordnung justiert am Flansch (3) befestigt und der Flansch (3) direkt oder über einen ringförmigen Vorsprung der Kugellinsenhalterung (5) mit der Modulgehäusewand (6) hermetisch dicht verbunden.

Die erfindungsgemäße Lichtleitfaser-Linsen-Anordnung findet insbesondere bei elektrooptischen Wandlermodulen Anwendung.

FIG 1

# Hermetisch dichte Lichtleitfaser-Linsen-Anordnung, insbesondere für optoelektronische Module, und Verfahren zu ihrer Herstellung.

Die Erfindung betrifft eine hermetisch dichte Lichtleitfaser-Linsen-Anordnung nach dem Oberbegriff des Anspruchs 1 und ein Verfahren zu ihrer Herstellung.

Die Kopplung von einem optoelektronischen Bauelement in eine Monomode- oder Multimodefaser, oder die Kopplung von der Monomode-oder Multimodefaser zu einem optoelektronischen Bauteil erfolgt bekanntlich über die Freistrahloptik in einem Modul mit mindestens einer optischen Linse. Dabei ist zum Schutz des Bauteils und der zugehörigen Optik eine hermetisch dichte Lichtwellenleiterdurchführung durch die Wand des Modulgehäuses erforderlich.

Die Lichtleitfaser wird im Fall eines Empfängermoduls z.B. stumpf oder im Fall eines Sendermoduls mit einer Mikrolinse (Taper) vor dem optoelektronischen Bauelement fixiert und muß in der Gehäusedurchführung hermetisch dicht verschlossen werden.

In Lichtwellenleiter-Sender- bzw. Empfängersystemen werden bekanntlich optische Linsen, insbesondere in Form von Kugellinsen zur Aus- bzw. Einkopplung des vom optoelektronischen Halbleiterbauelement herrührenden bzw. zu empfangenden Lichtes in einen bzw. aus einem Lichtwellenleiter, vorzugsweise in Form einer Glasfaser, verwendet.

Dabei treten insbesondere folgende Probleme auf:
Die Halterung der Linse soll in einer exakt definierten Position im Lichtweg zwischen aktivem Halbleiterbauelement und Lichtwellenleiter bei Toleranzen im $\mu$m-Bereich erfolgen. Die Linse soll auf optimale Ein- bzw. Auskopplung leicht justierbar sein. Außerdem soll keine Beeinträchtigung des aktiven Halbleiterchips durch die Linsenhalterung, z.B. durch mechanische Verspannung, auftreten.

Bei den bekannten Koppelanordnungen wurden oder werden bisher folgende Linsenbefestigungsmethoden angewendet:
Zum Beispiel wird eine optische Linse direkt auf einem Halbleiterchip aufgewachsen; eine optische Linse wird direkt auf einen Halbleiterchip geklebt oder ein Halbleiterchip ist in einem Gehäuse mit Linsenkappe montiert.

Der Nachteil dieser Anordnungen bzw. Befestigungsmethoden besteht allerdings darin, daß keine definierten Abstände zwischen Halbleiterchip bzw. optoelektronischem Bauelement und optischer Linse einstellbar sind bzw. große Toleranzen in Kauf genommen werden müssen.

Der Erfindung liegt die Aufgabe zugrunde, diese Nachteile bei einer Lichtleitfaser-Linsen-Anordnung der eingangs genannten Art zu vermeiden und eine Anordnung zu schaffen, die ein unkompliziertes, exaktes Justieren und Fixieren der Fokuslage der Linse und der optimalen Übereinstimmung der optischen Achsen von Linse und Faser ermöglicht und die hermetisch dicht und daher besonders zum Einsatz in optoelektronischen Modulen geeignet ist.

Diese Aufgabe wird erfindungsgemäß durch eine hermetisch dichte Lichtleitfaser-Linsen-Anordnung mit den Merkmalen des Anspruchs 1 bzw. durch ein Verfahren mit den Merkmalen des Anspruchs 5 gelöst.

Vorteilhafte Ausgestaltungen bzw. Weiterbildungen der Erfindung sind Gegenstand zusätzlicher Ansprüche.

Bei der Justierung und dem Zusammenbau der erfindungsgemäßen Anordnung wird zweckmäßig in folgender Weise vorgegangen:
Nachdem auf die Lichtleitfaser ein relativ dickwandiges Metallröhrchen aufgeglast ist, wird dieses Metallröhrchen in einen Flansch eingebracht und kann zu der Kugellinse, die wiederum in eine Kugellinsenhalterung eingeglast oder geklebt ist, justiert werden. Bei dieser Z-Achsenjustierung wird der Abstand A des Fokusses zu der Hauptebene der Kugellinse festgelegt und vorzugsweise mit einer Laserschweißverbindung zwischen Flansch und Metallröhrchen fixiert. Die Teile werden dann hermetisch dicht verschweißt. Danach erfolgt die Justierung der x- und y-Achse durch das Verschieben der Kugellinsenhalterung quer zum Flansch, wobei hiermit das Schielen der Faser-Linsen-Anordnung zur optischen Achse auf $\pm 0,5°$ korrigiert werden kann. Anschließend wird die Kugellinsenhalterung mit mehreren Laserschweißpunkten am Flansch fixiert.

Vor der weiteren Verarbeitung kann die Faser-Linsen-Anordnung auf richtige Fokuslage, kleinen Schielwinkel und Funktionstüchtigkeit geprüft werden. Die Ausbeute des Modulbaus wird somit wesentlich erhöht. Der Verwurf kritischer und teuerer Bauelemente kann damit vermieden werden.

Die Lichtleitfaser-Linsen-Anordnung kann jetzt an einem optischen Sende- und/oder Empfangsmodul wiederum in der x-y-Achse grob justiert und mit Laserschweißpunkten fixiert werden. Anschließend wird der Flansch mit der Modulgehäusewand hermetisch dicht verschweißt. Die hierbei verwendeten Materialien müssen jeweils mit dem Laserschweißverfahren schweißbar sein.

Die hermetische Abdichtung erfolgt über: Lichtleitfaser-Metallröhrchen; Metallröhrchen-Flansch; Flansch-Gehäusewand.

Ein zweiter Aufbau wird nach dem gleichen Verfahren hergestellt, nur die hermetische Abdichtung erfolgt jetzt über: Kugellinse-Kugellinsenhalterung und Kugellinsenhalterung-Gehäusewand. Dabei muß man die Lichtleitfaser in das Metallröhrchen nicht mehr hermetisch dicht einglasen, sondern kann sie auch einkleben.

Die mit der Erfindung erzielten Vorteile bestehen insbesondere darin, daß eine vorgeprüfte Lichtleitfaser-Linsen-Anordnung an ein optisches Sende- und/oder Empfangsmodul justiert und fixiert wird. Die Fokuslage an der Anordnung ist genau einstellbar. Der Schielwinkel ist an der Anordnung genau einstellbar. Die Linse ist zur Lichtleitfaser in den Achsen x-y-z justierbar, wobei mit besonderem Vorteil die Linse in den Achsen quer (x- und y-Achse) zur Lichtleitfaser justierbar ist. Außerdem ist die Lichtwellenleiter-Durchführung hermetisch dicht. Anstatt eines Metallröhrchens könnte auch eine Lichtwellenleiter-Steckerkupplung montiert werden. Durch Entspiegeln der Kugellinse läßt sich der Koppelwirkungsgrad noch erhöhen und die Reflexion vermeiden. Schließlich wird die Justierung im Submikrometerbereich (0,1µm) vor dem optoelektronischen Bauelement, z.B. der Laserdiode, von der Gehäusedurchführung mechanisch entkoppelt.

Anhand von in den Figuren der Zeichnung dargestellten, bevorzugten Ausführungsbeispielen wird die Erfindung weiter erläutert. Einander entsprechende Teile sind in den Figuren mit den gleichen Bezugszeichen versehen. Es zeigen:

Fig. 1 eine erfindungsgemäße Lichtleitfaser-Linsen-Anordnung im Schnitt und

Fig. 2 eine weitere erfindungsgemäße Lichtleitfaser-Linsen-Anordnung im Schnitt.

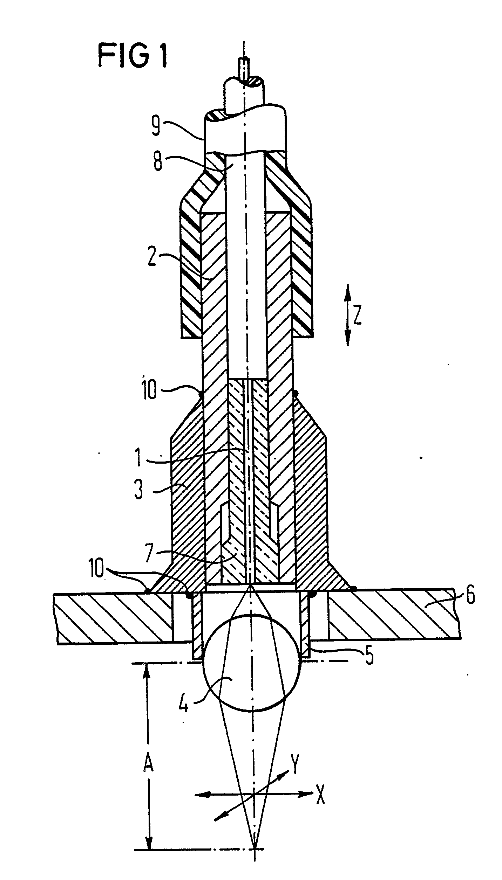

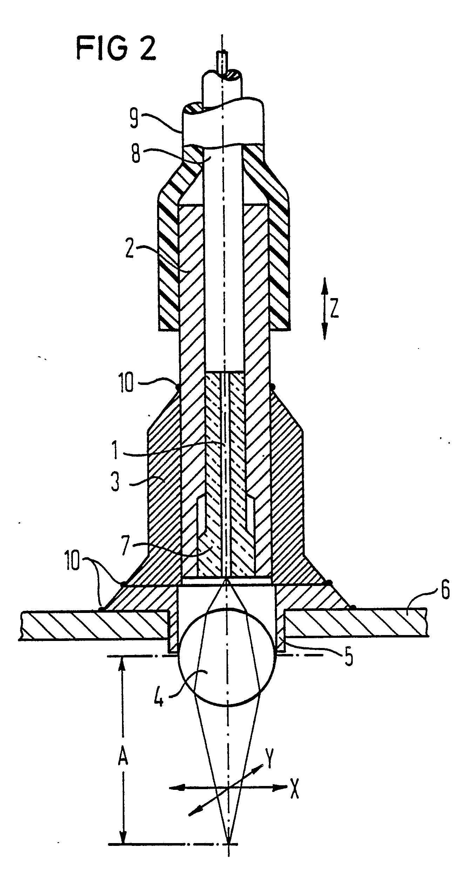

Die in den Figuren 1 und 2 dargestellten Lichtleitfaser-Linsen-Anordnungen bestehen aus einer Lichtleitfaser 1, die durch ein Metallröhrchen 2 geführt ist. Die von ihrer Umhüllung (coating) 8 befreite nackte Lichtleitfaser 1 ist im Metallröhrchen 2 befestigt. In den dargestellten Beispielen ist die Befestigung hermetisch dicht, und zwar in Form einer Druckeinglasung 7. Zu diesem Zweck ist das Metallröhrchen 2 relativ dickwandig ausgebildet und am gehäuseseitigen Ende im Innenquerschnitt erweitert. Das Metallröhrchen 2 ist über einen Flansch 3 an einer Öffnung in der Modulgehäusewand 6 befestigt. Diese Verbindung 10 ist hermetisch dicht und wird vorzugsweise durch Laserschweißen hergestellt. Auf das äußere Ende des Metallrohrchens 2 ist ein Schrumpfschlauch 9 geschoben, der das mit der Umhüllung 8 versehene Teil der Lichtleitfaser 1 (Festader) als Knickschutz eng umschließt. Das die Lichtleitfaser 1 führende Metallröhrchen 2 ist im Flansch 3 auf den vorgegebenen Abstand A des Fokusses zu der Kugellinse 4 (Brennweite) justiert und an dem Flansch 3 befestigt. Das Einjustieren erfolgt dabei durch Axialverschiebung, d. h. in Richtung der in den Figuren mit einem Pfeil angedeuteten z-Achse. Die Befestigung wird vorzugsweise durch Laserschweißen an der Nahtstelle bzw. Verbindung 10 vom äußeren Ende des Flansches 3 zum Metallröhrchen 2 vorgenommen. Die aus einem Metallröhrchen bestehende Halterung 5 der Kugellinse 4, die vorzugsweise als Preßhalterung ausgebildet ist, wird auf der gehäuseseitigen Stirnfläche des Flansches 3 durch Querverschiebung auf optimale Übereinstimmung der optischen Achsen der Anordnung justiert und dann am Flansch 3 befestigt. Die Querverschiebung erfolgt dabei in Richtung der in den Figuren mit den gekreuzten Pfeilen angedeuteten x- und y-Achsen (Raumdimensionen). Die Befestigung der Kugellinsenhalterung 5 auf der gehäuseseitigen Stirnfläche des Flansches 3 ist wiederum als Laserschweißverbindung 10 ausgeführt; allerdings ist in diesem Beispiel ein Punktschweißen ausreichend. Der Flansch 3 mit den justierten Teilen der Anordnung ist bei dem in Fig. 1 dargestellten Ausführungsbeispiel direkt mit der Modulgehäusewand 6 durch eine Laserschweißnaht 10 hermetisch dicht verbunden.

Bei dem in Fig. 2 dargestellten Ausführungsbeispiel ist der Aufbau nahezu identisch mit der in Fig. 1 dargestellten Ausführungsform und wird nach dem gleichen Verfahren hergestellt. Nur die hermetische Abdichtung erfolgt in diesem Beispiel über die Verbindungen Kugellinse 4 - Kugellinsenhalterung 5 und Kugellinsenhalterung 5 - Modulgehäusewand 6. Zu diesem Zweck weist das Metallröhrchen der Halterung 5 der Kugellinse 4 an seinem flanschseitigen Ende einen ringförmigen Vorsprung auf. Die hermetisch dichten Verbindungen 10 bilden die Laserschweißnähte an den Rändern zwischen Flansch 3 und Vorsprung der Kugellinsenhalterung 5 sowie Vorsprung der Kugellinsenhalterung 5 und Modulgehäusewand 6. Diese Ausführungsform hat insbesondere den Vorteil, daß man die Lichtleitfaser 1 in das Metallröhrchen 2 nicht mehr hermetisch dicht einglasen muß, sondern diese z.B. auch durch Einkleben befestigen kann.

## Ansprüche

1. Hermetisch dichte Lichtleitfaser-Linsen-Anordnung, insbesondere für optoelektronische Module, mit einer Lichtleitfaser, die durch ein Metallröhrchen geführt und in diesem fixiert ist, das über einen Flansch an einer Öffnung in der Modulgehäusewand befestigt ist, und mit einer Kugellinse, die in einer Halterung fixiert im Modulgehäuse angeordnet ist, **dadurch gekennzeichnet**, daß das die Lichtleitfaser (1) führende Metallröhrchen (2) im Flansch (3) durch Axialverschiebung auf einen vorgegebenen Abstand (A) des Fokusses zu der Kugellinse (4) justiert an dem Flansch (3) befestigt ist, daß die aus einem Metallröhrchen bestehende Halterung (5) der Kugellinse (4) auf der gehäuseseitigen Stirnfläche des Flansches (3) durch Querverschiebung auf optimale Übereinstimmung der optischen Achsen der Anordnung justiert am Flansch (3) befestigt ist, und daß der justierte Flansch (3) direkt oder über einen ringförmigen Vorsprung der Kugellinsenhalterung (5) mit der Modulgehäusewand (6) hermetisch dicht verbunden ist.

2. Anordnung nach Anspruch 1, **dadurch gekennzeichnet**, daß die hermetische Abdichtung über die Verbindungen Lichtleitfaser (1) - Metallröhrchen (2), Metallröhrchen (2) - Flansch (3) und Flansch (3) - Modulgehäusewand (6) erfolgt.

3. Anordnung nach Anspruch 1, **dadurch gekennzeichnet**, daß das Metallröhrchen der Halterung (5) der Kugellinse (4) an seinem flanschseitigen Ende einen ringförmigen Vorsprung aufweist, und daß die hermetische Abdichtung über die Verbindungen Kugellinse (4) - Linsenhalterung (5) und Linsenhalterung (5) - Modulgehäusewand (6) erfolgt.

4. Anordnung nach einem der Ansprüche 1 bis 3, **dadurch gekennzeichnet**, daß das die Lichtleitfaser (1) führende Metallröhrchen (2) mit dem Flansch (3), der Flansch (3) mit der Kugellinsenhalterung (5) sowie die Modulgehäusewand (6) mit dem Flansch (3) oder der Kugellinsenhalterung (5) durch Laserschweißen hermetisch dicht verbunden sind.

5. Verfahren zum Herstellen einer Anordnung nach einem der Ansprüche 1 bis 4, **dadurch gekennzeichnet**, daß das die Lichtleitfaser (1) führende Metallröhrchen (2) in einen Flansch (3) eingebracht und in z-Achsrichtung zum Festlegen des Abstandes (A) des Fokuses zur Kugellinse (4) justiert, fixiert und hermetisch dicht mit dem Flansch (3) verbunden wird, daß danach durch Verschieben der Kugellinsenhalterung (5) quer zum Flansch (3) die Justierung in x- und y-Achsrichtung vorgenommen wird, wobei das Schielen der Anordnung zu deren optischer Achse korrigiert wird, daß anschließend die Kugellinsenhalterung (5) am Flansch (3) fixiert wird, und daß dann die Anordnung an einem Modul in der x- und y-Achse wiederum justiert, fixiert und anschließend mit der Modulgehäusewand (6) hermetisch dicht verbunden wird.

6. Verfahren nach Anspruch 5, **dadurch gekennzeichnet**, daß das Fixieren und hermetisch dichte Verbinden der Metallteile des Metallröhrchens (2), des Flansches (3), der Kugellinsenhalterung (5) und der Modulgehäusewand (6) durch Laserschweißung vorgenommen wird.

# FIG 1

# FIG 2

| | Europäisches Patentamt | EUROPÄISCHER RECHERCHENBERICHT | Nummer der Anmeldung |
|---|---|---|---|
| | | | EP 89 10 4632 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 191 328 (SIEMENS) <br> * Figuren 2-4; Seite 14, Zeilen 12-29; Seite 15, Zeilen 1-11; Zusammenfassung * <br> --- | 1,3 | G 02 B 6/42 <br> G 02 B 6/32 |
| A | PATENT ABSTRACTS OF JAPAN, Band 6, Nr. 212 (P-151)[1090], 26. Oktober 1982, Seite 70 P 151; & JP-A-57 118 212 (NIPPON DENKI K.K.) 23-07-1982 <br> * Zusammenfassung * <br> --- | 1,5,6 | |
| A | EP-A-0 238 977 (SIEMENS) <br> * Figuren 3,5e; Spalte 6, Zeilen 44-58; Spalte 7, Zeilen 1-47 * <br> --- | 1 | |
| A | PATENT ABSTRACTS OF JAPAN, Band 7, Nr. 2 (P-166)[1147], 7. Januar 1983, Seite 18 P 166; & JP-A-57 161 818 (FUJITSU K.K.) 05-10-1982 <br> * Zusammenfassung * <br> --- | 1 | |
| A | PATENT ABSTRACTS OF JAPAN, Band 10, Nr. 169 (P-468)[2225], 14. Juni 1986, Seite 105 P 468; & JP-A-61 20 912 (MATSUSHITA DENKI SANGYO K.K.) 29-01-1986 <br> * Zusammenfassung * <br> --- | 1,3,5,6 | **RECHERCHIERTE SACHGEBIETE (Int. Cl.4)** <br><br> G 02 B 6/00 |
| A | PATENT ABSTRACTS OF JAPAN, Band 10, Nr. 74 (P-439)[2131], 25. März 1986, Seite 49 P 439; & JP-A-60 212 712 (OKI DENKI KOGYO K.K.) 25-10-1985 <br> * Zusammenfassung * <br> ----- | 1,3 | |

Der vorliegende Recherchenbericht wurde für alle Patentansprüche erstellt

| Recherchenort | Abschlußdatum der Recherche | Prüfer |
|---|---|---|
| DEN HAAG | 07-07-1989 | MATHYSSEK K. |